(19) Europäisches Patentamt
European Patent Office
Office européen des brevets

(11) **EP 3 234 529 B1**

(12) **FASCICULE DE BREVET EUROPEEN**

(45) Date de publication et mention de la délivrance du brevet:
**01.01.2020 Bulletin 2020/01**

(51) Int Cl.:
*G01L 1/16* (2006.01)     *G01L 1/18* (2006.01)
*G01L 5/16* (2006.01)

(21) Numéro de dépôt: **15802027.1**

(22) Date de dépôt: **25.11.2015**

(86) Numéro de dépôt international:
**PCT/EP2015/077585**

(87) Numéro de publication internationale:
**WO 2016/096341 (23.06.2016 Gazette 2016/25)**

(54) **CAPTEUR D'EFFORTS RESONANT MULTIDIMENSIONNEL**

MULTIDIMENSIONALES RESONANT DEHNUNGSSENSOR

MULTIDIMENSIONAL RESONANT STRAIN SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2014 FR 1462476**

(43) Date de publication de la demande:
**25.10.2017 Bulletin 2017/43**

(73) Titulaire: **Commissariat à l'Énergie Atomique et aux Énergies Alternatives 75015 Paris (FR)**

(72) Inventeurs:
- **CASTANO CANO, Davinson 92160 Antony (FR)**
- **GROSSARD, Mathieu 91370 Verrières Le Buisson (FR)**
- **HUBERT, Arnaud 60200 Compiègne (FR)**

(74) Mandataire: **Lucas, Laurent Jacques et al Marks & Clerk France Conseils en Propriété Industrielle Immeuble Visium 22, Avenue Aristide Briand 94117 Arcueil Cedex (FR)**

(56) Documents cités:
**WO-A1-2011/061334     WO-A1-2011/061334**

- **CASTANO-CANO DAVINSON ET AL: "Multi-axis force sensing with pre-stressed resonant composite plates: An alternative to strain gauge force sensors", 2014 IEEE/ASME INTERNATIONAL CONFERENCE ON ADVANCED INTELLIGENT MECHATRONICS, IEEE, 8 juillet 2014 (2014-07-08), pages 1361-1367, XP032628532, DOI: 10.1109/AIM.2014.6878272**
- **CASTANO-CANO DAVINSON ET AL: "Multi-axis force sensing with pre-stressed resonant composite plates: An alternative to strain gauge force sensors", 2014 IEEE/ASME INTERNATIONAL CONFERENCE ON ADVANCED INTELLIGENT MECHATRONICS, IEEE, 8 July 2014 (2014-07-08), pages 1361-1367, XP032628532, DOI: 10.1109/AIM.2014.6878272 [retrieved on 2014-08-13]**

EP 3 234 529 B1

**Description**

La présente invention concerne un capteur d'efforts résonant multidimensionnel. Elle s'applique notamment dans les domaines de la robotique, de la mécatronique et plus généralement tous les domaines techniques nécessitant des mesures d'efforts.

En tant que propriété intensive, une force ne peut pas être mesurée directement. Des capteurs de forces permettent d'estimer la force appliquée via la déformation ou le déplacement d'un corps d'épreuve.

Un capteur de force est un dispositif qui allie à la fois l'électronique et la mécanique. Il permet de convertir une force, c'est-à-dire une grandeur physique vectorielle en une grandeur électrique. Pour ce faire, différentes technologies et principes physiques de capteurs existent pour la mesure d'effort, qu'il s'agisse de forces ou de moments. On peut notamment citer les capteurs construits en utilisant des jauges de déformation mécanique connectées en un pont électronique approprié, un pont de *Wheatstone* généralement. Ce type de capteur est le plus couramment rencontré, aussi bien dans le milieu industriel que dans la littérature scientifique. Pour autant, ce principe présente un certain nombre d'inconvénients, parmi lesquels on peut citer le bruit de mesure et les phénomènes de décollement des jauges sur le corps d'épreuve du capteur.

Un autre principe physique exploitant des mécanismes résonants est également à la base de quelques capteurs de force. Les capteurs résonants exploitent la mesure de la variation fréquentielle de résonances mécaniques d'une structure au moyen de transducteurs pour estimer une force.

Actuellement, les capteurs d'efforts exploitant le principe de structure résonante ne permettent pas de mesurer directement et simultanément l'ensemble de toutes les composantes du torseur d'effort appliqué au corps d'épreuve du capteur. Pour le moment, il existe des capteurs résonants unitaires qui restent limités à la mesure d'une seule composante d'effort (force longitudinale ou transversale). La mesure de certaines autres composantes du torseur d'effort ne peut se faire qu'en rapportant sur la structure hôte d'autres capteurs unitaires dont la configuration spatiale permet la mesure de composantes d'effort dans d'autres directions. La reconstruction dynamique et simultanée de l'ensemble des composantes du torseur d'effort n'est donc pas directe.

En particulier, il est connu des capteurs de forces résonants avec des géométries de type « poutre », réalisés avec des configurations de type une, deux voire trois poutres parallèles, comme décrits notamment dans les documents de A. Cheshmehdoost and B.E. Jones. Design and performance characteristics of an integrated high capacity DETF-based force sensor. Sensors and Actuators A: Physical, 52(13) : 99-102, Mars 1996 et de T. Fabula, H.J. Wagner, B. Schmidt, and S. Buttgenbach. Triple-beam resonant silicon force sensor based on piezoelectric thin _lms. Sensors and Actuators A: Physical, 42(13):375-380, Avril 1994. Ces dernières présentent des avantages sur les cas de configuration dite « mono-poutre », par exemple, meilleur facteur de qualité, et plus grande sensibilité. Ce type de structures a été utilisé pour mesurer une seule composante de la force, en général, celle dont la direction est alignée le long de l'axe de la poutre. Un document C. Barthod, Y. Teisseyre, C. Ghin, and G. Gautier. Resonant force sensor using a PLL electronic. Sensors and Actuators A: Physical, 104(2):143-150, Avril 2003. Décrit des mesures de force non-axiales où les structures utilisent des mécanismes de transformation. Cependant, ces mécanismes sont coûteux et complexes à mettre en œuvre. La demande de brevet WO 2011/061334 A1 divulgue aussi un capteur de force résonant avec des poutres. Le document Multi-axis Force Sensing with Pre-stressed Resonant Composite Plates: An Alternative to Strain Gauge Force Sensors par Davinson Castano-Cano, Mathieu Grossard et Arnaud Hubert divulgue le concept de plaques équipées avec des transducteurs d'excitation.

Un problème technique à résoudre est donc la réalisation d'un capteur d'effort résonant apte à mesurer les composantes d'efforts dans les six dimensions, c'est-à-dire les trois dimensions de force et les trois dimensions de couple, par ailleurs fiable et économique.

Un but de l'invention est notamment de permettre la réalisation d'un tel capteur d'effort résonant multi dimensionnel. A cet effet, l'invention a pour objet un capteur d'efforts résonant, ledit capteur comportant un corps d'épreuve apte à subir un torseur d'efforts produits par une structure mécanique externe, ledit corps comportant au moins :

- une première interface et une deuxième interface aptes chacune à entrer en contact avec ladite structure ;
- au moins deux zones sensibles disposées chacune entre ces deux interfaces ;

une zone sensible étant formée d'une plaque encastrée dans un cadre solidaire mécaniquement desdites interfaces, ladite plaque étant apte à entrer en résonance sous l'effet d'excitations mécaniques locales produites en des points particuliers par des transducteurs d'excitation portant ladite plaque à plusieurs fréquences de résonances, des capteurs captant les signaux résonant produits au niveau desdits points particuliers, des moyens de mesure mesurant les décalages de fréquences de résonance de signaux qui sont des combinaisons linéaires des signaux résonant captés, lesdits décalages étant fonction de contraintes mécaniques induites par lesdits efforts et transmises à ladite plaque par ledit cadre, les composantes dudit torseur d'efforts étant déterminées à partir des décalages de fréquences de résonance mesurés sur les plaques desdites zones sensibles.

Lesdites excitations sont par exemple produites simultanément.

Dans un mode de réalisation particulier, lesdits points particuliers sont situés en des lignes nodales de mode vibratoires de façon à permettre la sélection de fréquences de résonances de modes particuliers par lesdites combinaisons.

La combinaison des desdites fréquences est par exemple une opération d'addition ou de soustraction.

Dans un mode de réalisation possible, chaque plaque ayant une dimension selon un axe x et une dimension selon un axe y, elle comporte quatre points particuliers d'excitation, un point Nord et un point Sud étant situés sur l'axe de symétrie de ladite plaque selon y, et un point Ouest et un point Est étant situés sur l'axe de symétrie selon x, lesdits points Nord et Sud et Ouest et Est étant situés symétriquement par rapport à l'intersection des deux axes de symétrie. Trois fréquences de résonances de trois modes vibratoires sont par exemple sélectionnées, une fréquence d'un premier mode étant sélectionnée en additionnant les fréquences de résonance du point Nord et du point Sud et/ou du point Ouest et du point Est, une fréquence d'un deuxième mode étant sélectionnée en effectuant une soustraction entre la mesure du point Nord et la mesure du point Sud, et une troisième fréquence d'un troisième mode étant sélectionnée en effectuant une soustraction entre la mesure du point Ouest et la mesure du point Est.

Les mesures de décalages sont par exemple effectuées par des circuits à verrouillage de phase dont le signal de sortie commande un transducteur.

Lesdits transducteurs sont par exemple de type piézo-électrique.

Les capteurs sont par exemple de type piézo-électrique, fixés chacun en regard d'un transducteur de l'autre côté de la face de la dite plaque, les signaux produits étant les signaux de charges desdits capteurs de type piézo-électrique.

Ledit corps d'épreuve est par exemple monolithique.

Lesdites zones sensibles font par exemple un angle non nul avec lesdites interfaces donnant audit corps d'épreuve un aspect pyramidal.

Dans un autre mode de réalisation possible, lesdites zones font un angle nul avec lesdites interfaces, donnant audit corps d'épreuve un aspect aplati.

La géométrie dudit corps d'épreuve est par exemple invariante selon l'angle séparant les points centraux de deux zones sensibles.

Ladite plaque sensible est par exemple placée en dehors de la fibre neutre de l'ensemble formé du cadre et de ladite plaque.

Une enveloppe de protection recouvre par exemple ledit corps d'épreuve.

D'autres avantages et caractéristiques de l'invention apparaîtront à l'aide de la description qui suit, faite en regard de dessins annexés qui représentent :

- Les figures 1a à 1d, un exemple de réalisation d'un capteur selon l'invention par plusieurs vues en perspective ;
- Les figures 2a et 2b, une illustration plus précises de l'exemple ci-dessus ;
- La figure 3, une illustration du principe de détection d'effort par résonance ;
- La figure 4, un exemple de réalisation d'une zone sensible d'un capteur selon l'invention ;
- La figure 5, par une vue en coupe, un mode de réalisation particulièrement avantageux d'une zone sensible ;
- La figure 6, un exemple de configuration de placement de transducteurs sur une plaque d'une zone sensible ;
- La figure 7, une illustration des propriétés de filtre spatiale de la configuration précédente ;
- La figure 8, par une vue en coupe, un module de contrôle d'un transducteur ;
- La figure 9, une illustration d'une stratégie de commande de transducteurs ;
- La figure 10, un exemple de configuration de connexion de la sortie de capteurs de signaux.

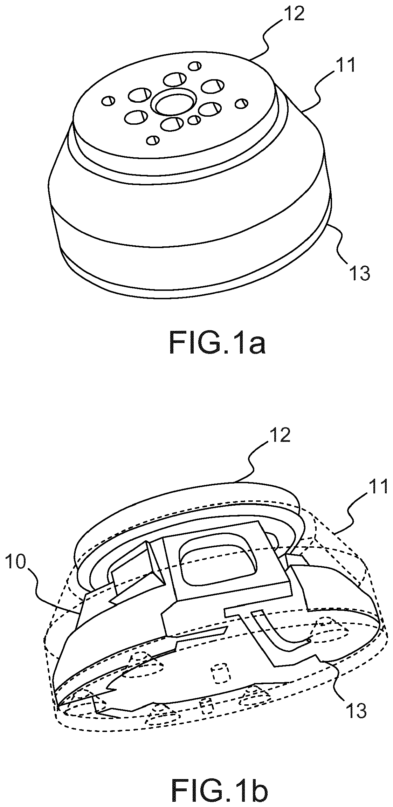

Les figures 1a à 1d présentent par plusieurs vues en perspective un exemple de réalisation d'un capteur selon l'invention. La figure 1a montre le capteur muni d'une enveloppe de protection 11, ayant une face aval 12 et une face amont 13. Lorsque le capteur est monté dans une structure mécanique externe générant les efforts à mesurer, la face aval 12 est au contact de celle-ci et est orientée vers la partie aval de la structure, et la face amont 13 est au contact de cette même structure, orientée vers sa partie amont. Des trous sont prévus dans ces faces pour permettre la fixation du capteur sur la structure mécanique.

La figure 1b présente le capteur dans une autre vue avec l'enveloppe de protection 11 représentée en transparence pour laisser voir l'intérieur.

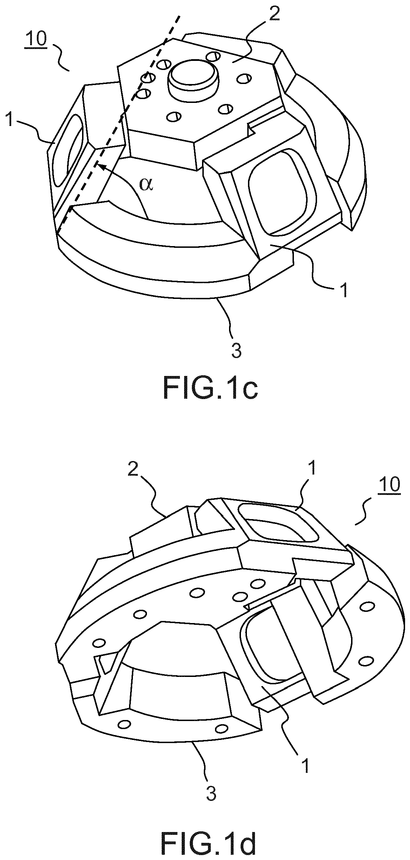

La figure 1c présente un corps d'épreuve rigide 10 que l'on voit à l'intérieur de l'enveloppe 11 dans la figure 1b. Le corps d'épreuve comporte au moins :

- Une interface aval 2 destinée à rentrer en contact avec la structure mécanique externe, non représentée, via la face aval 12 de l'enveloppe ;
- Une interface amont 3 destinée à rentrer en contact avec la structure mécanique externe via la face amont 13 de l'enveloppe ;
- Un ensemble de zones sensibles 1, à base de plaque vibrantes, disposées entre ces deux interfaces, les efforts produits par la structure mécanique étant transmis à ces zones sensibles par ces interfaces 1, 2.

Ces zones sensibles 1 sont solidaires mécaniquement des interfaces 2, 3 de façon à former avec ces dernières un ensemble 10 rigide. Dans un mode de réalisation préféré, le corps d'épreuve 10 peut être monolithique, les zones sensibles et les interfaces étant formées dans un seul bloc. Ce bloc peut être en aluminium ou en inox, d'autres matériaux étant bien sûr possibles pourvu qu'ils aient les propriétés mécaniques adéquates.

La face de contact des interfaces 2, 3 est de préférence plane afin d'obtenir le meilleur contact avec la structure mécanique externe.

Les interfaces 2, 3 présentent par exemple des trous, filetés ou non, pour permettre la fixation du capteur sur cette structure.

La figure 1d présente ce même corps d'épreuve vue du côté de l'interface amont 3.

Dans l'exemple des figures 1a à 1d, les zones sensibles 1 font un angle a non nul avec le plan des interfaces 2, 3 donnant au corps d'épreuve un aspect pyramidal. Il est possible de prévoir un mode de réalisation où cet angle a est nul, donnant au corps d'épreuve 10 un aspect plat.

Une des parties aval 12 et amont 13 de l'enveloppe 11 peut prendre la forme d'un capot recouvrant l'interface 2, 3 qu'elle protège, l'enveloppe 11 étant alors en fait constituée d'une enveloppe et d'un capot. D'autres formes et types d'enveloppe de protections sont possibles, pourvu qu'elles protègent les composants du capteur et permettent une transmission fiable des efforts produits par la structure externe. Il est également possible de prévoir des modes de réalisation sans enveloppe de protection.

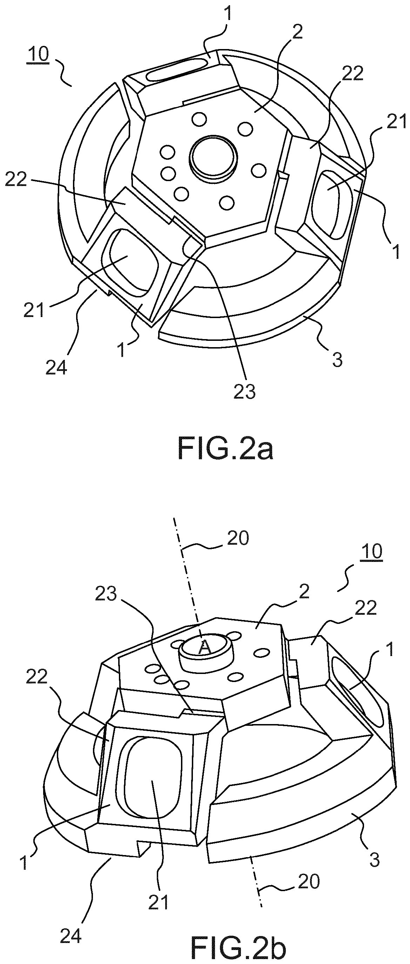

Les figures 2a et 2b illustrent plus particulièrement la structure mécanique des zones sensibles 1 et leurs liens mécanique avec les interfaces, par deux vues en perspective, dans un exemple où le corps d'épreuve 10 comporte trois zones sensibles 1, comme dans les figures 1a à 1b.

Une zone sensible 1 est formée d'une plaque 21 encastrée dans un cadre 22, cette plaque étant apte à vibrer sous l'effet d'excitations mécaniques locales.

Plus précisément la plaque 21 est rendue vibrante par des excitations locales produites par des transducteurs, non représentés. Ces transducteurs qui sont par exemple des patchs piézo-électriques provoquent des vibrations transversales sur la plaque. Dans la suite, on utilisera à titre d'exemple des transducteurs de type piézo-électriques.

Par ces vibrations transversales, la plaque peut entrer en résonance mécanique selon les trois axes d'espaces x, y, z où les axes x et y sont dans le plan de la plaque et l'axe z est perpendiculaire à ce plan.

Le cadre 22 est fixé à ses deux extrémités aux interfaces 2, 3. Le lien mécanique entre une extrémité du cadre et une interface ne se fait pas sur toute la largeur du cadre mais uniquement sur une partie 23, 24 de largeur. Les cadres sont disposés régulièrement autour de l'axe 20 du corps d'épreuve 10. La structure ou géométrie de ce dernier est par ailleurs telle qu'elle est invariante par rotation de 120°, plus généralement elle est invariante selon l'angle séparant les points centraux de deux zones sensibles.

Le torseur d'effort produit par la structure mécanique externe, c'est-à-dire l'effort à mesurer, est supposé être localisé en un point A d'intersection de l'axe du corps avec l'interface aval. Ce torseur d'effort sera noté par la suite $\overset{o}{F}$, appelé indifféremment effort ou torseur d'effort.

Ce torseur $\overset{o}{F} = [\ F_x, F_y, F_z, M_x, M_y, M_z\ ]$ est composé de trois composantes de force $F_x, F_y, F_z,$ et de trois composantes de couple $M_x, M_y, M_z$.

La structure du corps d'épreuve telle que présentée par les figures 1a à 1d, et les figures 2a et 2b, est optimisée de telle sorte que seules les plaques 1 entrent en résonance, c'est-à-dire que les hautes fréquences de résonance transmises par ces plaques vibrantes au reste du corps d'épreuve sont complètement négligeables et peuvent être ignorées.

La mesure du torseur d'effort est basée sur l'utilisation des plaques vibrantes 21 dont les fréquences et les déformées modales sont sensibles aux efforts externes. En effet, quand un effort quasi-statique $\overset{o}{F}$ est appliqué au point A du corps d'épreuve, il provoque une précontrainte $\overset{o}{\sigma}$ à l'ensemble de la structure du corps d'épreuve. En particulier, cette précontrainte $\overset{o}{\sigma}$ est transmise à chaque plaque résonante 21. Le principe de fonctionnement du capteur réside dans le fait que les fréquences propres et les déformées modales de chaque plaque vibrante dépendent fortement de leurs conditions aux limites, en termes de force et de déplacement. Les propriétés mécaniques des plaques, en termes de rigidité apparentes, sont en effet altérées par cette précontrainte provoquant notamment une modification de la fréquence propre, ou fréquence de résonance. Ainsi, après une étape de calibration du capteur, les mesures de décalage de fréquences propres de chaque plaque 21, dues à l'effort $\overset{o}{F}$, permettent d'estimer cet effort dans toutes ses dimensions comme le montre la suite de cette description.

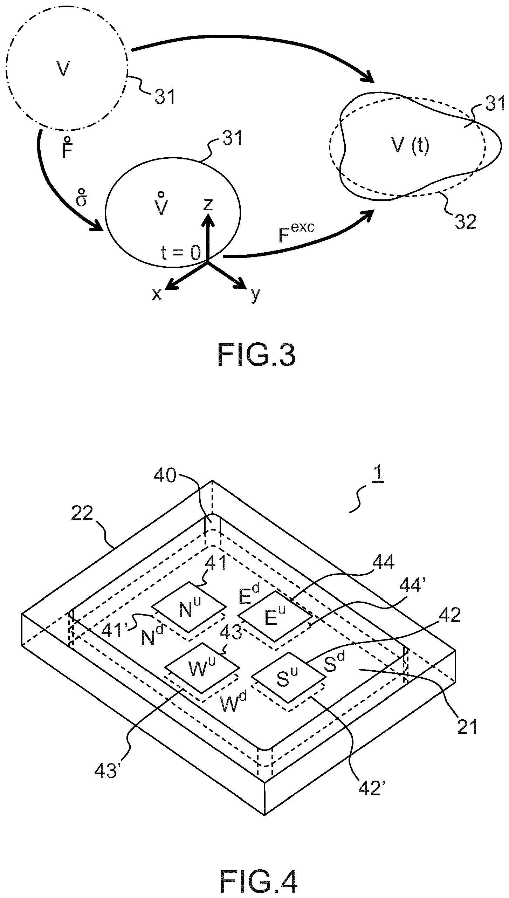

La figure 3 illustre le principe de la détection d'efforts par un capteur résonant. Un corps 31 initialement précontraint est excité par une force $F^{exc}$ générée par effet piézo-électrique par exemple. Cette force d'excitation $F^{exc}$ met le corps 31 en résonances 32. La précontrainte initiale $\sigma$ affecte ces résonances.

La figure 3 montre donc le corps 31 dans un état initial V où il n'est pas soumis à un effort. Il est ensuite précontraint par un effort externe $\overset{o}{F}$ et passe dans un état $\overset{o}{V}$. Dans ce nouvel état, correspondant à une phase opérationnelle, l'excitation $F^{exc}$ est appliquée. Cette excitation porte le corps 31 en résonance V(t), la fréquence de résonance étant décalée en raison de la précontrainte $\overset{o}{\sigma}$ appliquée. En d'autres termes, la fréquence de résonance est décalée par rapport à un état sans précontrainte.

Deux types de forces sont à prendre en compte dans ce cas de figure, ces forces étant caractérisées par leurs bandes de fréquences qui sont très éloignées l'une de l'autre :

- La force d'excitation $F^{exc}$ est en hautes fréquences, elle est créée par l'excitation produite par les éléments piézoélectriques qui mettent le corps 31 en résonances, les plaques 21 dans le cas de la présente invention. Les résonances peuvent être obtenues par l'application d'un potentiel électrique $\Phi$ aux bornes des éléments piézoélectriques ;

- Les efforts à mesurer $\overset{o}{F}$ sont à une relativement basse fréquence. La relation entre ces efforts et le décalage de fréquence de résonance sont dus à la précontrainte. Dans le cas d'une application robotique par exemple, la bande de fréquences de la précontrainte $\overset{o}{\sigma}$ est très en dessous des fréquences de résonance du corps 31 comme des plaques 21. La précontrainte peut donc être considérée comme quasi-statique.

En notant $Freq\,(\sigma)$ la fréquence de précontrainte et $Freq\,(F^{exc})$ la fréquence de la force d'excitation, nous avons : $Freq\,(\sigma) \ll Freq\,(F^{exc})$.

Un modèle dynamique d'une plaque vibrante est notamment décrit dans le document de D.Castano-Cano, M. Grossard et A.Hubert : « Multi-axis Force Sensing with Pre-stressed Resonant Composite Plates : An Alternative to Strain Gauge Force Sensors », 2014 IEEE/ASME International Conférence on Advanced Intelligent Mechatronics (AIM), Besançon, France, July 8-11, 2014. Ce modèle est défini par la relation suivante :

$$[M]\begin{Bmatrix} \ddot{U} \\ \ddot{\Phi} \end{Bmatrix} + [K]\begin{Bmatrix} U \\ \Phi \end{Bmatrix} = \begin{Bmatrix} F^{exc} \\ Q \end{Bmatrix} \qquad (1)$$

Où [M] est la matrice de masse et *[K]* la matrice de raideur, *U* est le déplacement d'un nœud d'une structure maillée, $\Phi$ est le potentiel électrique aux bornes des électrodes d'un élément piézoélectrique, $F^{exc}$ est la force d'excitation qui produit les vibration de la plaque et *Q* est la charge électrique sur les électrodes de l'élément piézoélectrique

La matrice de masse et la matrice de raideur sont définies par les relations suivantes :

$$[M] = \begin{bmatrix} M & 0 \\ 0 & 0 \end{bmatrix} \qquad (2a)$$

$$[K] = \begin{bmatrix} K_g\left(\overset{o}{\sigma}\right) + K_{UU} & K_{U\Phi} \\ K_{\Phi U} & K_{\Phi\Phi} \end{bmatrix} \qquad (2b)$$

où $[K_{UU}]$ est la matrice de raideur mécanique, $[K_{U\Phi}] = [K_{\Phi U}]^T$ est la matrice de couplage électromécanique et $[K_{\Phi\Phi}]$ est la matrice de capacitance. La matrice de raideur *[K]* comporte également la matrice $[K_g\left(\overset{o}{\sigma}\right)]$ qui est la matrice de raideur géométrique qui prend en compte l'effort à mesurer F via la précontrainte induite $\overset{o}{\sigma}$, comme une variation apparente de raideur.

A partir de la relation (1), la fréquence de résonance est obtenue par le calcul de $[M]^{-1}\,[K]$.

La figure 4 présente un exemple de réalisation d'un élément sensible 1. Celui-ci comporte une plaque rectangulaire 21 encastrée dans un cadre mécanique massif 22. Les angles intérieurs 40 du cadre sont par exemple arrondis. Des transducteurs sont fixés sur la plaque 21. Ces transducteurs ont pour fonction d'exciter la plaque 21 en des endroits particulier de celle-ci. Les transducteurs sont donc situés en ces endroits particuliers. Dans un mode de mise en œuvre préféré de l'invention, les transducteurs sont des éléments piézo-électriques ayant la forme de patchs. Dans toute la suite de la description, les transducteurs utilisés seront donc à titre d'exemple des patchs piézo-électriques. Dans l'exemple de la figure 4, quatre patchs piézo-électriques 41, 42, 43, 44 sont fixés sur une face de la plaque 21, dite face de dessus. Ces patchs sont destinés à exciter la plaque. Des patchs piézo-électriques 41', 42', 43', 44' sont par exemple situés sur l'autre face de la plaque, en regard des patchs du dessus, ces patchs du dessous produisent un signal de charge permettant de mesurer les fréquences de résonances de la plaque, ces patchs ayant donc une fonction d'observation pour capter les fréquences de résonance.

Le cadre 22 empêche la transmission des hautes fréquences vers le reste de la structure du corps d'épreuve et transmet à la plaque 21 les effets de la précontraintes dus à l'effort externe, ces effets étant à basses fréquences. En d'autres termes, le cadre 22 agit comme un filtre pour les hautes fréquences, lorsque les fréquences de résonance sont produites sur la plaque 21, et permet dans le même temps que l'effort quasi-statique soit transmis à cette même plaque.

Un potentiel électrique $\Phi$ est appliqué sur les électrodes des patchs piézoélectriques 41, 42, 43, 44 de la face supérieure pour mettre la plaque en vibration. Les charges électriques Q sont mesurées sur les électrodes des patchs 41', 42', 43', 44' de la face inférieure pour obtenir des signaux fréquentiels et donc mesurer la fréquence de résonance.

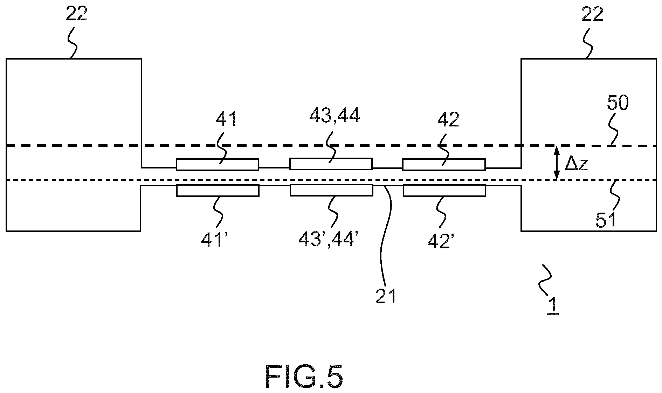

La figure 5 présente un mode de réalisation particulièrement avantageuse d'une zone sensible 1, par une vue en coupe. Plus particulièrement, la figure 5 présente une configuration où la plaque 21 n'est pas positionnée au niveau de la fibre neutre 50 de l'ensemble constitué du cadre et de la plaque. La fibre neutre se définit comme la fibre unique qui ne subit aucune variation de longueur, quelle que soit la flexion de l'ensemble. Ainsi, dans le cas d'un effort hors plan induisant une flexion pure de la plaque, il n'existe pas de précontrainte dans le plan sur l'axe de la fibre neutre. La plaque 21 est située à un niveau 51 faisant un écart $\Delta z$ avec la fibre neutre. Dans ce mode de réalisation avantageux, les patchs piézo-électriques en sont pas sensibles aux précontraintes induites.

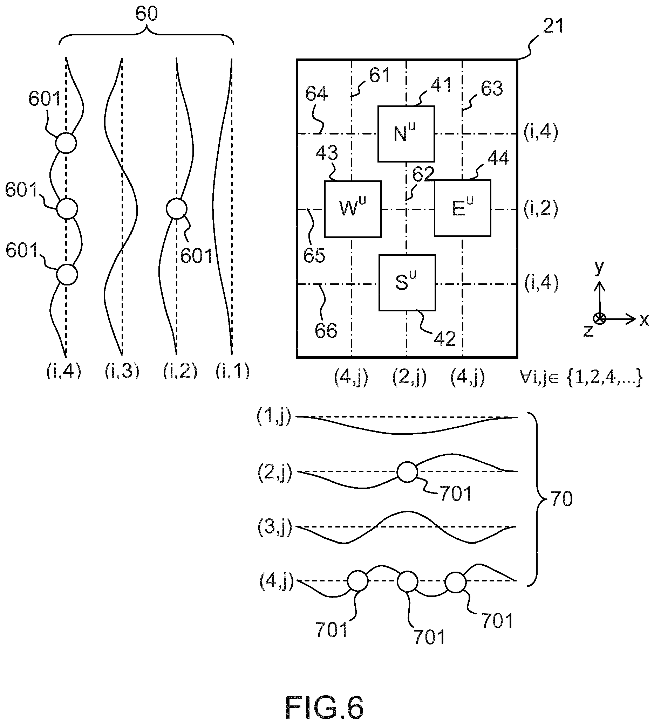

La figure 6 illustre un placement particulier des patchs 41, 42, 43, 44 sur la plaque 21 et les premiers modes d'excitation produit par ce placement particulier, ou configuration particulière, des patchs. Les modes d'excitation sont représentées par les profils de leurs déformées, représentés en regard de leurs lignes nodales sur la plaque 21.

Comme cela sera montré par la suite, une structure d'élément sensible, telles qu'illustrée par les figures 3 ou 4, avec un placement particulier des patchs piézo-électriques, couplé à une stratégie de commande judicieuse de ces patchs, permet d'obtenir un capteur multidimensionnel performant.

La capacité d'un patch de contrôler, ou d'observer, une fréquence de résonance de la plaque est directement liée à son placement relatif par rapport à chaque ligne nodale. La façon dont sont positionnés les patchs caractérise la commandabilité et l'observabilité modales de la plaque. En particulier, le placement des patchs sur la ligne nodale d'une fréquence de résonance sélectionnée conduit à leurs insensibilités aux modes correspondants, et agit comme un filtre spatial modal. La figure 6 présente une plaque 21 dans un plan x, y avec les lignes nodales 61, 62, 63, 64, 65, 66 correspondant aux différents modes de vibration. Les différents modes de vibration 60, 70 sont illustrés en regard des lignes nodales. Plus particulièrement, le nœud 701 du mode (2, j) selon l'axe x est représenté en regard de la ligne nodale 62, de même les nœuds 701 du mode (4, j) sont représentés en regard des lignes nodales 61, 62, 63. Il en de même pour la représentation des modes (i, 2) et (i, 4) selon y, et de leurs nœuds 601, en regard des lignes nodales 64, 65, 66. Les rangs i et j peuvent être quelconques.

De façon conventionnelle, le patch 41 situé en haut de la vue est appelé patch Nord. Les deux patchs 43, 44 au-dessous sont appelés respectivement patch Ouest et patch Est conformément à leur position par rapport au patch nord, et le quatrième patch 42 est appelé patch Sud. Seuls sont représentés les patchs 41, 42, 43, 44 d'excitation, les patchs d'observation 41', 42', 43', 44' étant placés sur l'autre face avec les même règles d'orientation.

Les patchs Nord et Sud sont placés sur l'axe de symétrie 62 selon y de la plaque et les patchs Ouest et Est sont placés sur l'axe de symétrie 65 selon x. Les patchs Nord et Sud sont placés symétriquement par rapport à l'intersection des deux axes 62, 65. Il en est de même pour les patchs Ouest et Est.

Dans cette configuration, les patchs Nord et Sud sont centrés sur la ligne nodale 62 du mode (2, j), les patchs Ouest et Est sont centrés sur deux lignes nodales 61, 63 du mode (4, j), de chaque côté de la ligne nodale précédente 62. Les patchs Ouest et Est sont centrés sur la ligne nodale 65 du mode (i, 2), les patchs Nord et Sud sont centrés sur deux lignes nodales 64, 66 du mode (i, 4), de chaque côté de la ligne 65 précédente.

La configuration illustrée par la figure 6 permet d'effectuer un filtrage spatial des modes (i, j) de la plaque qui ont au moins un rang, i ou j, égal à 2 ou à 4. En particulier, les patchs Nord et Sud sont insensibles au mode (2, j) car centrés sur la ligne nodale de ce mode, c'est-à-dire que ces patchs sont incapables d'activer et/ou de mesurer ce mode.

La suite de la description sera réalisée avec cette configuration, d'autres configurations étant possibles.

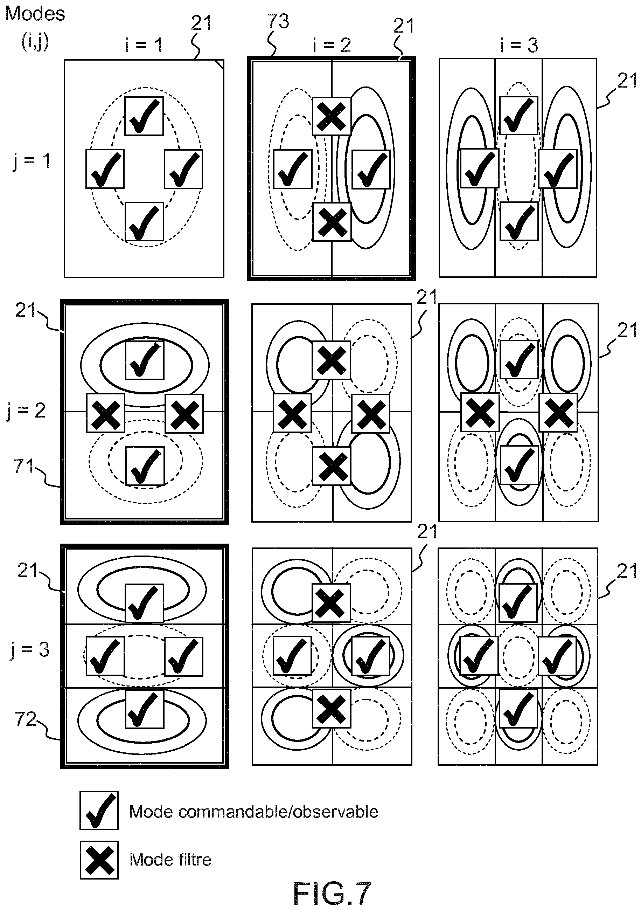

La figure 7 illustre cette propriété de filtre spatial d'un capteur selon l'invention. Plus particulièrement, elle illustre le filtrage spatial obtenu pour les différents modes, neuf modes étant représentés correspondant aux rangs i = 1 à 3 et j = 1 à 3. Les patchs Nord, Sud, Ouest, Est sont représentés avec chacun une indication de leur état. Le signe V précise que le patch est dans un mode commandable ou observable, c'est-à-dire qu'il peut exciter le mode (i, j) ou le mesurer. Une croix indique que le mode fait fonction de filtre pour le mode (i, j), c'est-à-dire qu'il est insensible pour ce mode, ne pouvant ni l'exciter ni le mesurer. En considérant que les patchs Nord et Sud forment un premier groupe de patchs et que les patchs Ouest et Est forment un deuxième groupe de patchs, la figure 7 montre notamment que :

- Les modes avec i = 2 ou j = 2 sont partiellement filtrés, ce qui signifie qu'un groupe de patchs ne peut pas activer ou mesurer ces mode ;
- Le mode (2, 2) est totalement filtré, c'est-à-dire que tous les patchs sont incapables d'activer ou de mesurer ces modes.

On pourrait montrer de même que les modes avec i = 4 ou j = 4 sont totalement filtrés.
Le filtrage est obtenu en plaçant les patchs sur les lignes nodales de façon symétrique, comme illustré par l'exemple de la figure 6.
Un placement des patchs piézo-électriques, du type de cet exemple, permettant de filtrer des fréquences de résonances apporte des avantages. Cela permet notamment de limiter les composants électroniques pour le traitement des signaux.

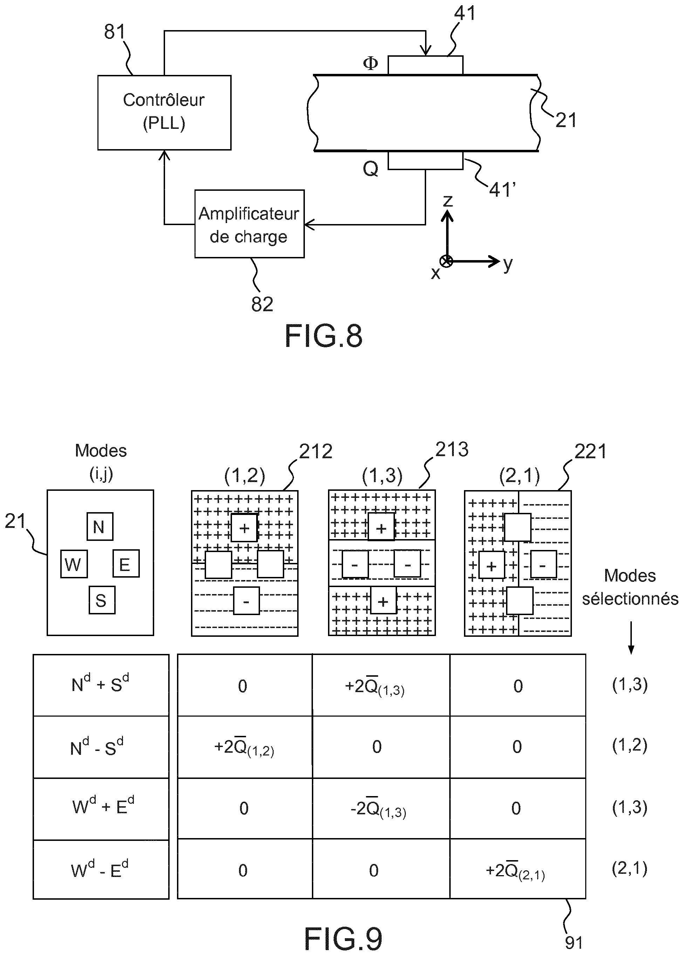

La figure 8 illustre par une vue en coupe un exemple de module de contrôle d'un patch piézo-électrique 41 pouvant être utilisé dans un capteur selon l'invention. Le principe de la mesure d'effort reposant sur le décalage de fréquence de résonance produit par la précontrainte induite, le module comporte un circuit à verrouillage de phase 81, encore appelé circuit PLL, contrôlant la phase du signal à la fréquence de résonance de la plaque, en boucle fermée. Les fréquences de résonances sont pistées en utilisant une référence de phase $\Delta\Phi_{ref} = \pi/2$, car pour les patchs co-localisés 41, 41', la résonance est caractérisée par une différence de phases de $\pi/2$ entre le signal d'entrée du patch d'excitation 41 et le signal de sortie du patch d'observation 41'. Le circuit PLL permet ainsi de mesurer les décalages de fréquences de résonance, notamment dus aux précontraintes subies par la plaque. Un amplificateur 82 peut amplifier par exemple les signaux entre la sortie du patch d'observation 41' et le circuit PLL.
La figure 9 illustre un exemple de stratégie de commande des patchs avec trois modes d'excitation particuliers. Les modes d'excitation retenus sont les modes (1, 2), (1,3), (2, 1) dont les états 71, 72, 73 sont représentés en figure 7.

Par exemple, l'estimation simultanée de trois composantes de force $\overset{o}{F}_x$, $\overset{o}{F}_y$, $\overset{o}{F}_z$, nécessite de mesurer en même temps les décalages de fréquences de trois modes résonant. Cette superposition des modes est implémentée dans un capteur selon l'invention en utilisant trois signaux sinusoïdaux centrés sur les fréquences de résonance sélectionnées, qui sont appliqués aux différents patchs d'activation. Les fréquences de résonance utilisées sont par exemple celles de trois modes (1, 2), (1,3), (2, 1). Les trois excitations appliquées par exemple sur les patchs d'excitation Nord ($N^u$), Ouest ($W^u$) et Sud ($S^u$) peuvent être décrites par l'ensemble de relations suivant :

$$\begin{cases} \Phi^{N^u}_{(1,2)} = \overline{\Phi}^{N^u}_{(1,2)} \sin(\omega_{(1,2)} t) \\ \Phi^{W^u}_{(2,1)} = \overline{\Phi}^{W^u}_{(2,1)} \sin(\omega_{(2,1)} t) \\ \Phi^{S^u}_{(1,3)} = \overline{\Phi}^{S^u}_{(1,3)} \sin(\omega_{(1,3)} t) \end{cases} \qquad (3)$$

Où $\Phi^{X^u}_m$ est l'amplitude de la sinusoïde appliqué au patch $X^u$ pour le mode m, $X^u$ étant $N^u$, $W^u$ ou $S^u$, m étant le mode (1, 2), (1,3) ou (2, 1).
La réponse d'une plaque 21 à cet ensemble d'excitations simultanées génère des charges électriques sur les électrodes des patchs d'observation. Le signal de chaque électrode peut être exprimé comme la superposition des contributions de tous les signaux d'excitation. On note $\overline{Q}^{X^{u,d}}_m$ la charge en un point sur les électrodes d'un patch $X^{u,d}$ pour un mode m, $X^{u,d}$ étant l'un quelconque des patchs d'excitation Nord ($N^u$), Ouest ($W^u$), Est ($E^u$) et Sud ($S^u$) ou des patchs d'observation Nord ($N^d$), Ouest ($W^d$), Est ($E^d$) et Sud ($S^d$).
La charge globale $Q^{X^{u,d}}$ sur les électrodes d'un patch $X^{u,d}$ peut être donnée par la relation suivante, $\mathcal{M}$ étant l'ensemble des modes (1, 2), (1,3) ou (2, 1) :

$$Q^{X^{u,d}} = \sum_{m \in \mathcal{M}} \overline{Q}^{X^{u,d}}_m \sin\left(\omega_m t + \Delta\phi_m\left(X^{u,d}\right)\right) \qquad (4)$$

L'amplitude du signal de charge donné par cette relation (4) présente quelques propriétés basées sur les déformées modales :

1. Lorsqu'un patch $X^{u,d}$ est placé sur une ligne nodale pour un mode m, il en résulte que $\bar{Q}_m^{X^{u,d}} = 0$ ;

2. Pour deux patchs géographiquement opposés, c'est-à-dire Nord/Sud ou Ouest/Est, qui ne sont pas sur une ligne nodale pour un mode m, le signe de l'amplitude de charge $\bar{Q}_m^{X^{u,d}}$ dépend de la parité du rang du mode, j pour les patchs Nord et Sud et i pour les patchs Ouest et Est, en particulier :

$$\bar{Q}_m^{N^{u,d}} = (-1)^{j+1} \bar{Q}_m^{S^{u,d}} \quad \text{et} \quad \bar{Q}_m^{W^{u,d}} = (-1)^{j+1} \bar{Q}_m^{E^{u,d}} \qquad (5)$$

En exploitant ces deux propriétés, des stratégies de commande peuvent être réalisées entre les signaux pour extraire une seule composante modale. Ces stratégies de commande peuvent être réalisées simplement par additions et soustractions comme l'illustre la figure 9.
La figure 9 illustre plus particulièrement la façon d'extraire les signaux mesurés pour chacun des modes (1, 2), (2, 1) et (1, 3). Selon l'invention, alors que ces modes sont excités simultanément par exemple, on réalise des opérations d'additions ou de soustractions entre les signaux issus des patchs d'observation $N^d$, $S^d$, $W^d$ et $E^d$. Un tableau 91 montre les résultats obtenus pour chaque opération et pour chaque mode, tenant compte des deux propriétés ci-dessus. Pour chaque colonne du tableau, correspondant à un mode, on précise par une représentation 211, 212, 213 le signe du signal de charge capté par les patchs. S'ils sont insensibles au mode, les patchs sont représentés par un carré noir. Ainsi pour le mode (1, 2) dont le profil est notamment illustré par la figure 6, le signal sur le patch $N^d$ est positif et le signal sur le patch $S^d$ est négatif. Il s'agit d'une représentation 211 à un instant donné, ces signes pouvant être inversés à un autre instant, la représentation 212 symbolisant le fait que les signes sont opposés entre les deux patchs $N^d$ et $S^d$. Les autres patchs $W^d$ et $E^d$ qui sont à l'état « insensible » dans le mode (1, 2) sont représentés par un carré noir. Le principe de représentation étant le même pour les représentations 213, 221 des autres modes.
La première ligne du tableau 91 présente les résultats d'une première opération. Cette première opération réalise la somme du signal de charge du patch Nord $N^d$ et du signal de charge du patch Sud $S^d$, opération notée $N^d + S^d$. Compte-tenu des états des patchs symbolisées par les différentes représentations 212, 213, 221 et des propriétés 1 et 2 précédentes, il s'ensuit que seul le mode (1, 3) est sélectionné, le signal de charge étant égal à $+2Q_{(1,3)}$. On montre de même que :

- Le mode (1, 2) est sélectionné par l'opération $N^d - S^d$ ;
- Le mode (1, 3) est également sélectionné par l'opération $W^d + E^d$ ;
- Le mode (2, 1) est sélectionné par l'opération $W^d - E^d$ ;

On remarque que le mode (1, 3) peut être sélectionné par deux opérations, $N^d + S^d$ et $W^d + E^d$.
Cette redondance peut avantageusement être utilisée pour vérifier la validité de la méthode de mesure, les deux signaux $N^d + S^d$ et $W^d + E^d$ devant être en opposition de phase.
Les signaux en sorties des opérations sont connectés à un circuit PLL du type de la figure 8, pour la mesure de ces signaux.

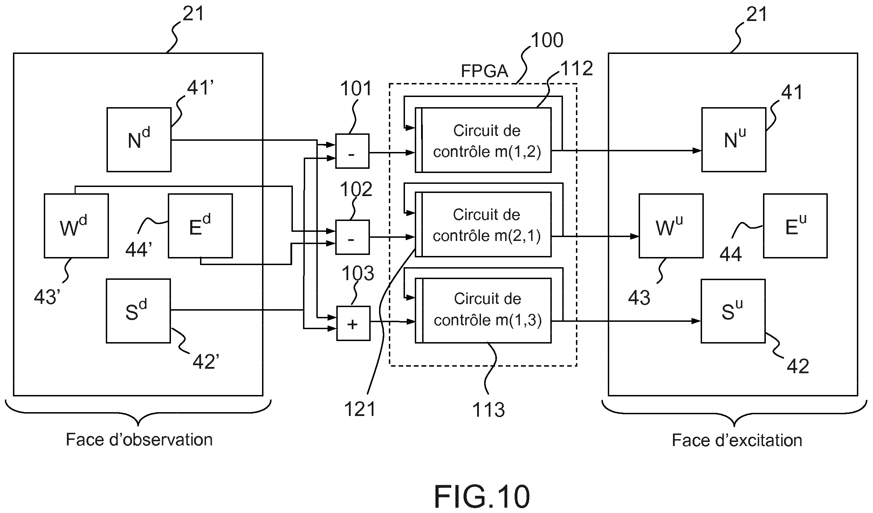

La figure 10 illustre un exemple de configuration de la connexion des sorties des patchs d'observation 41', 42', 43', 44' produisant les résultats des opérations précédentes, avec la superposition des modes (1, 2), (2, 1) et (1, 3). Les sorties des patchs $N^d$ et $S^d$ sont connectées aux deux entrées d'un premier soustracteur 101 et aux deux entrées d'un additionneur 103. Les sortes des patchs $W^d + E^d$ sont connectées aux entrées d'un deuxième soustracteur 102. La sortie du premier soustracteur sélectionnant la fréquence de résonance du mode (1, 2) est reliée à l'entrée d'un premier circuit de contrôle 112. De même, la sortie du deuxième soustracteur sélectionnant la fréquence de résonance du mode (2, 1) est reliée à l'entrée d'un deuxième circuit de contrôle 121 et la sortie de l'additionneur sélectionnant la fréquence de résonance du mode (1, 3) est reliée à l'entrée d'un troisième circuit de contrôle 113. Les circuits de contrôle 112, 121, 113 sont formés d'un circuit PLL 81 et d'un amplificateur 82 comme dans la figure 8. Les sorties des premier, deuxième et troisième circuits sont connectés respectivement aux patchs $N^u$, $W^u$ et $S^u$ de la face opposée de la plaque, et rebouclent sur l'entrée des PLL. Les circuits de contrôle sont par exemple intégrés dans un FPGA 100.
On se place dans l'exemple de réalisation d'un capteur où le corps d'épreuve 10 comporte trois zones sensibles 1, donc trois plaques 21 conformément aux figures 1a à 1d et 2a et 2b. On note $\{\Delta f_i\}$ la matrice des décalages de fréquences de résonance de la $i^{\text{ème}}$ plaque i étant égal à 1, 2 ou 3. On reste dans l'exemple ci-dessus où les trois fréquences de résonance sont celles des modes (1, 2), (1, 3), (2, 1), mesurées conformément à la figure 10 par exemple. $\{\Delta f_i\}$ est une matrice colonne, ou vecteur, dont les composantes sont les décalages de ces trois fréquences de résonance. En considérant que les fréquences de résonance varient linéairement en fonction des efforts à mesurer, la relation entre les décalages de fréquence et les composantes d'efforts à mesurer, pour la $i^{\text{ème}}$ plaque, est donnée par la relation suivante :

$$\{\Delta f_i\} = [C]_i \left\{ \overset{o}{F} \right\} \qquad\qquad (6)$$

où $\left\{ \overset{o}{F} \right\}$ est une matrice colonne constituée des composantes d'effort à mesurer et $[C]_i$ est la matrice caractéristique de la $i^{\text{ème}}$ plaque :

$$[C]_i = \begin{bmatrix} c^i_{(1,2),x} & c^i_{(1,2),y} & c^i_{(1,2),z} \\ c^i_{(2,1),x} & c^i_{(2,1),y} & c^i_{(2,1),z} \\ c^i_{(1,3),x} & c^i_{(1,3),y} & c^i_{(1,3),z} \end{bmatrix}_i$$

La matrice $[C]_i$ est fonction des modes vibratoires (1, 2), (1, 3) et (2, 1). Pour identifier chaque composant de la matrice $[C]_i$, une calibration expérimentale ou par simulation peut être effectuée selon chacun des trois axes x, y et z. Chaque composante selon x, y, et z de la force à mesurer $\overset{o}{F}$ est alors appliquée successivement. On obtient ainsi successivement les composantes

$$[c^i_{(1,2),x}, \; c^i_{(2,1),x}, \; c^i_{(1,3),x}]^{\mathsf{T}} \; ;$$

$$[c^i_{(1,2),y}, \; c^i_{(2,1),y}, \; c^i_{(1,3),y}]^{\mathsf{T}} \; ;$$

et

$$[c^i_{(1,2),z}, \; c^i_{(2,1),z}, \; c^i_{(1,3),z}]^{\mathsf{T}}$$

de la matrice $[C]_i$.

Ainsi, chaque colonne de la matrice est caractérisée séparément.

Pour obtenir l'ensemble des composantes d'efforts dans les six dimensions, c'est-à-dire les trois composantes de forces et les trois composantes de couples, on utilise la matrice caractéristique du corps d'épreuve 10. Cette matrice caractéristique [C] de l'ensemble du corps d'épreuve, tenant compte de l'ensemble des plaques résonantes 21 peut être obtenue à partir des matrices caractéristiques $[C]_i$ de chaque plaque.

A partir de cette matrice [C] on peut obtenir l'ensemble des composantes selon la relation suivante :

$$\{\Delta f\} = [C] \left\{ \overset{o}{F} \right\} \qquad\qquad (7)$$

où $\{\Delta f\}$ est la matrice colonne composée des décalages de fréquences mesurées sur toutes les plaques, conformément à la figure 10 par exemple. Connaissant les matrices [C] et $\{\Delta f\}$ on peut en déduire la matrice d'effort, ou vecteur d'effort $\left\{ \overset{o}{F} \right\}$ dont les composantes sont les composantes d'efforts à mesurer. Le capteur selon l'invention comporte des moyens de calcul permettant d'extraire les composantes de ce vecteur. Ces moyens de calcul peuvent être intégrés dans le FPGA 100 ou sur un circuit imprimé par exemple comportant le FPGA 100, tous types d'implantation adéquate pouvant être utilisés.

Pour obtenir une mesure d'effort selon les six dimensions, c'est-à-dire selon les trois composantes des forces et les trois composantes de couple, il faut que le corps d'épreuve 10 comporte au moins deux plaques résonantes 21, chaque plaque pouvant fournir trois dimensions, en raison du fait qu'elle présente plusieurs résonances pour des sollicitations dans les trois dimensions x, y, z.

Dans l'exemple présent où le corps d'épreuve comporte trois plaques, la matrice [C] est la matrice transposée des trois matrices [C]$_i$ concaténées, soit :

$$[C] = [C_1, C_2, C_3]^{\mathrm{T}} \qquad (8)$$

La matrice {Δf} des décalages de fréquence est la concaténation des trois matrices colonne $\Delta f_1, \Delta f_2, \Delta f_3$ des décalages de fréquences mesurés sur les trois plaques.

Dans cet exemple, la matrice [C] n'est pas carrée mais est de dimension 9x6, c'est-à-dire comportant 9 lignes et 6 colonnes, le vecteur {Δf} ayant 9 composantes, qui sont les 9 mesures de décalages obtenues sur l'ensemble des trois plaques, et le vecteur $\left\{ \begin{smallmatrix} o \\ F \end{smallmatrix} \right\}$ est un vecteur ayant 6 composantes, qui sont les six composantes d'efforts.

On ne peut donc pas obtenir le vecteur $\left\{ \begin{smallmatrix} o \\ F \end{smallmatrix} \right\}$ recherché par une simple inversion de matrice, la matrice [C] n'étant pas inversible.

Plusieurs solutions peuvent être envisagées pour extraire ce vecteur $\left\{ \begin{smallmatrix} o \\ F \end{smallmatrix} \right\}$. On peut en particulier utiliser la matrice pseudo inverse [C]$^+$ définie selon la relation suivante :

$$[C]^+ = (C^{\mathrm{T}}C)^{-1}C^{\mathrm{T}}$$

$C^{\mathrm{T}}$ étant la matrice transposée de [C].

On obtient alors le vecteur $\left\{ \begin{smallmatrix} o \\ F \end{smallmatrix} \right\}$ recherché selon la relation suivante :

$$\left\{ \begin{smallmatrix} o \\ F \end{smallmatrix} \right\} = [C]^+\{\Delta f\} \qquad (9)$$

Dans le présent exemple, on obtient plus de mesures de décalages de fréquences que nécessaire. On obtient en effet 9 mesures pour 6 composantes. Cependant, cette redondance peut être avantageusement utilisée pour améliorer le conditionnement numérique des moyens de calcul. L'invention a été présentée avec un corps d'épreuve 10 comportant trois zones sensibles à base de plaques vibrantes, il est possible de prévoir un nombre supérieur de zones sensibles, c'est-à-dire de plaques. On augmente ainsi le coefficient de redondance.

L'invention a été également présentée en sélectionnant les trois modes vibratoires (1, 2), (1, 3) et (2, 1). Il est bien sûr possible de sélectionner d'autres modes, en plaçant les transducteurs et capteurs en d'autres endroits de la plaque et en effectuant d'autres combinaisons que les additions et soustractions de l'exemple donné ici. Plus généralement, on peut effectuer toutes combinaisons linéaires sur les signaux résonants captés, la combinaison linéaire identité étant bien sûr possible.

Un capteur selon l'invention peut bien sûr être utilisé dans le domaine de la robotique, par exemple pour des bras robotiques manipulateurs en interaction avec un environnement et pilotés en effort grâce à un capteur d'effort multiaxes montés à son extrémité pour contrôler l'effort exercé à cette extrémité. Elle peut aussi s'appliquer pour des bras robotiques interactif ou en interaction avec un opérateur, dans une phase de co-manipulation homme/robot, pour estimer les efforts fournis par l'opérateur pour détecter ses intentions de mouvement.

Avantageusement, l'invention dépasse largement ce cadre et peut être utilisée dans d'autres domaines, notamment industriels, pour lesquels la mesure de force est nécessaire. Les dimensions du capteur peuvent être aisément adaptées aux gammes d'efforts en jeu.

**Revendications**

1. Capteur d'efforts résonant, comportant un corps d'épreuve (10) apte à subir un torseur d'efforts produits par une structure mécanique externe, ledit corps (10) comportant au moins :

- une première interface (2) et une deuxième interface (3) aptes chacune à entrer en contact avec ladite structure ;
- au moins deux zones sensibles (1) disposées chacune entre ces deux interfaces (2, 3) ;

**caractérisé en ce que** une zone sensible est formée d'une plaque (21) encastrée dans un cadre (22) solidaire mécaniquement desdites interfaces, ladite plaque étant apte à entrer en résonance sous l'effet d'excitations mécaniques locales produites en des points particuliers ($N^U$, $S^U$, $W^U$, $E^U$) par des transducteurs d'excitation (41, 42, 43, 44) portant ladite plaque à plusieurs fréquences de résonances, des capteurs (41', 42', 43', 44') captant les signaux résonant produits au niveau desdits points particuliers, des moyens de mesure (81, 82) mesurant les décalages de fréquences de résonance de signaux qui sont des combinaisons linéaires des signaux résonant captés, lesdits décalages étant fonction de contraintes mécaniques induites par lesdits efforts et transmises à ladite plaque (21) par ledit cadre (22), les composantes dudit torseur d'efforts étant déterminées à partir des décalages de fréquences de résonance mesurés sur les plaques (21) desdites zones sensibles (1).

2. Capteur selon la revendication 1, **caractérisé en ce que** lesdites excitations sont produites simultanément.

3. Capteur selon l'une quelconque des revendications 1 ou 2, **caractérisé en ce que** lesdits points particuliers ($N^u$, $S^U$, $W^U$, $E^U$) sont situés en des lignes nodales (61, 62,63, 64, 65, 66) de mode vibratoires de façon à permettre la sélection de fréquences de résonances de modes particuliers par lesdites combinaisons.

4. Capteur selon l'une quelconque des revendications précédentes, **caractérisé en ce que** la combinaison des desdites fréquences est une opération d'addition ou de soustraction.

5. Capteur d'effort selon l'une quelconque des revendications précédentes, **caractérisé en ce que** chaque plaque (21) ayant une dimension selon un axe x et une dimension selon un axe y, elle comporte quatre points particuliers d'excitation ($N^u$, $S^U$, $W^U$, $E^U$), un point Nord ($N^U$) et un point Sud ($S^u$) étant situés sur l'axe de symétrie (62) de ladite plaque selon y, et un point Ouest ($W^U$) et un point Est ($E^u$) étant situés sur l'axe de symétrie (65) selon x, lesdits points Nord et Sud et Ouest et Est étant situés symétriquement par rapport à l'intersection des deux axes de symétrie (62, 65).

6. Capteur selon la revendication 5, **caractérisé en ce que** trois fréquences de résonances de trois modes vibratoires sont sélectionnées, une fréquence d'un premier mode étant sélectionnée en additionnant les fréquences de résonance du point Nord ($N^u$) et du point Sud ($N^U + S^U$) et/ou du point Ouest ($W^U$) et du point Est ($W^U + E^U$), une fréquence d'un deuxième mode étant sélectionnée en effectuant une soustraction entre la mesure du point Nord et la mesure du point Sud ($N^U - S^U$), et une troisième fréquence d'un troisième mode étant sélectionnée en effectuant une soustraction entre la mesure du point Ouest et la mesure du point Est ($W^U - E^U$).

7. Capteur selon l'une quelconque des revendications précédentes, **caractérisé en ce que** les mesures de décalages sont effectuées par des circuits à verrouillage de phase (81) dont le signal de sortie commande un transducteur.

8. Capteur selon l'une quelconque des revendications précédentes, **caractérisé en ce que** lesdits transducteurs (41, 42, 43, 44) sont de type piézo-électrique.

9. Capteur selon l'une quelconque des revendications précédentes, **caractérisé en ce que** les capteurs (41', 42', 43', 44') sont de type piézo-électrique, fixés chacun en regard d'un transducteur de l'autre côté de la face de la dite plaque (21), les signaux produits étant les signaux de charges desdits capteurs de type piézo-électrique.

10. Capteur selon l'une quelconque des revendications précédentes, **caractérisé en ce que** ledit corps d'épreuve (10) est monolithique.

11. Capteur selon l'une quelconque des revendications précédentes, **caractérisé en ce que** lesdites zones sensibles (1) font un angle non nul avec lesdites interfaces (2, 3) donnant audit corps d'épreuve (10) un aspect pyramidal.

12. Capteur selon l'une quelconque des revendications 1 à 10, **caractérisé en ce que** lesdites zones (1) font un angle nul avec lesdites interfaces (2, 3), donnant audit corps d'épreuve un aspect aplati.

13. Capteur selon l'une quelconque des revendications précédentes, **caractérisé en ce que** la géométrie dudit corps d'épreuve (10) est invariante selon l'angle séparant les points centraux de deux zones sensibles.

14. Capteur selon l'une quelconque des revendications précédentes, **caractérisé en ce que** la plaque sensible (21) est placée en dehors de la fibre neutre (50) de l'ensemble formé du cadre (22) et de ladite plaque (21).

15. Capteur selon l'une quelconque des revendications précédentes, **caractérisé en ce qu'**il comporte une enveloppe de protection (11, 12, 13) recouvrant ledit corps d'épreuve.

**Patentansprüche**

1. Resonanter Kraftsensor, beinhaltend einen Prüfkörper (10), welcher in der Lage ist, eine Schraube von Kräften zu dulden, welche durch eine äußere mechanische Struktur erzeugt werden, wobei der Körper (10) mindestens Folgendes beinhaltet:

   - eine erste Schnittstelle (2) und eine zweite Schnittstelle (3), welche jeweils in der Lage sind, in Kontakt mit der Struktur zu treten;
   - mindestens zwei empfindliche Bereiche (1), welche zwischen diesen beiden Schnittstellen (2, 3) angeordnet sind;

   **dadurch gekennzeichnet, dass** ein empfindlicher Bereich aus einer Platte (21) gebildet ist, welche in einen Rahmen (22) eingelassen ist, welcher fest mit den Schnittstellen verbunden ist, wobei die Platte in der Lage ist, unter Einwirkung von lokalen mechanischen Anregungen in Resonanz zu treten, welche an besonderen Punkten ($N^u$, $S^U$, $W^U$, $E^U$) durch Anregungsumformer (41, 42, 43, 44) erzeugt werden, welche die Platte zu unterschiedlichen Resonanzfrequenzen bringen, wobei Sensoren (41', 42', 43', 44') die auf Höhe der besonderen Punkte erzeugten resonanten Signale auffangen, wobei Messmittel (81, 82) Resonanz-Frequenzverschiebungen von Signalen messen, welche lineare Kombinationen der aufgefangenen resonanten Signale sind, wobei die Verschiebungen von mechanischen Spannungen abhängen, welche durch die Kräfte induziert und an die Platte (21) durch den Rahmen (22) übertragen werden, wobei die Komponenten der Kräfteschraube anhand der Verschiebungen der Resonanzfrequenz bestimmt werden, welche an den Platten (21) der empfindlichen Bereiche (1) gemessen werden.

2. Sensor nach Anspruch 1, **dadurch gekennzeichnet, dass** die Anregungen gleichzeitig erzeugt werden.

3. Sensor nach einem der Ansprüche 1 oder 2, **dadurch gekennzeichnet, dass** die besonderen Punkte ($N^u$, $S^U$, $W^U$, $E^U$) auf Knotenlinien (61, 62, 63, 64, 65, 66) von Schwingungsmodi liegen, um die Auswahl von Resonanzfrequenzen besonderer Modi durch die Kombinationen zu ermöglichen.

4. Sensor nach einem der vorhergehenden Ansprüche, **dadurch gekennzeichnet, dass** die Kombination der Frequenzen ein Schritt des Addierens oder des Subtrahierens ist.

5. Kraftsensor nach einem der vorhergehenden Ansprüche, **dadurch gekennzeichnet, dass** jede Platte (21), welche eine Abmessung entlang einer Achse x und eine Abmessung entlang einer Achse y besitzt, vier besondere Anregungspunkte ($N^u$, $S^U$, $W^U$, $E^u$) beinhaltet, wobei ein Nord-Punkt ($N^u$) und ein Süd-Punkt ($S^u$) auf der Symmetrieachse (62) der Platte entlang y befindlich sind, und ein West-Punkt (e) und ein Ost-Punkt ($E^u$) auf der Symmetrieachse (65) entlang x befindlich sind, wobei die Punkte Nord und Süd und West und Ost symmetrisch in Bezug auf den Schnittpunkt der beiden Symmetrieachsen (62, 65) befindlich sind.

6. Sensor nach Anspruch 5, **dadurch gekennzeichnet, dass** drei Resonanzfrequenzen von drei Schwingungsmodi gewählt werden, wobei eine Frequenz eines ersten Modus gewählt wird, indem man die Resonanzfrequenzen des Nord-Punktes ($N^u$) und des Süd-Punktes ($N^U + S^U$) und/oder des West-Punktes ($W^U$) und des Ost-Punktes ($W^U + E^U$) addiert, eine Frequenz eines zweiten Modus gewählt wird, in dem man eine Subtraktion zwischen der Messung des Nord-Punktes und der Messung des Süd-Punktes ($N^U - S^U$) vornimmt, und eine dritte Frequenz eines dritten Modus gewählt wird, indem man eine Subtraktion zwischen der Messung des West-Punktes und der Messung des Ost-Punktes ($W^U - E^U$) vornimmt.

7. Sensor nach einem der vorhergehenden Ansprüche, **dadurch gekennzeichnet, dass** die Verschiebungsmessungen durch Phasenverriegelungsschaltkreise (81) bewerkstelligt werden, deren Ausgangssignal einen Messumformer steuert.

8. Sensor nach einem der vorhergehenden Ansprüche, **dadurch gekennzeichnet, dass** die Messumformer (41, 42, 43, 44) Messumformer vom Typ piezoelektrische Umformer sind.

9. Sensor nach einem der vorhergehenden Ansprüche, **dadurch gekennzeichnet, dass** die Sensoren (41', 42', 43', 44') Sensoren vom Typ piezoelektrische Sensoren sind, welche jeweils gegenüber einem Messumwandler auf der anderen Seite der Seite der Platte (21) befestigt sind, wobei die erzeugten Signale Ladungssignale der Sensoren vom Typ piezoelektrische Sensoren sind.

10. Sensor nach einem der vorhergehenden Ansprüche, **dadurch gekennzeichnet, dass** der Prüfkörper (10) monolithisch ist.

11. Sensor nach einem der vorhergehenden Ansprüche, **dadurch gekennzeichnet, dass** die empfindlichen Bereiche (1) einen Winkel ungleich null mit den Schnittstellen (2, 3) bilden, welche dem Prüfkörper (10) einen pyramidalen Anblick verleihen.

12. Sensor nach einem der Ansprüche 1 bis 10, **dadurch gekennzeichnet, dass** die empfindlichen Bereiche (1) einen Winkel gleich null mit den Schnittstellen (2, 3) bilden, welche dem Prüfkörper einen abgeflachten Anblick verleihen.

13. Sensor nach einem der vorhergehenden Ansprüche, **dadurch gekennzeichnet, dass** die Geometrie des Prüfkörpers (10) entlang einem Winkel, welcher die zentralen Punkte der beiden empfindlichen Bereiche trennt, unveränderlich ist.

14. Sensor nach einem der vorhergehenden Ansprüche, **dadurch gekennzeichnet, dass** die empfindliche Platte (21) außerhalb der neutralen Faser (50) der Baugruppe platziert ist, welche aus dem Rahmen (22) und der Platte (21) gebildet wird.

15. Sensor nach einem der vorhergehenden Ansprüche, **dadurch gekennzeichnet, dass** er eine Schutzhülle (11, 12, 13) beinhaltet, welche den Prüfkörper bedeckt.

## Claims

1. A resonant force sensor, comprising a test body (10) able to be subjected to a force torsor produced by an external mechanical structure, said body (10) comprising at least:

   - one first interface (2) and one second interface (3) each able to come into contact with said structure;
   - at least two sensitive zones (1) each disposed between said two interfaces (2, 3);

   **characterised in that** a sensitive zone is formed by a plate (21) embedded in a frame (22) mechanically secured to said interfaces, said plate being able to resonate under the effect of local mechanical excitations produced at particular points ($N^u$, $S^U$, $W^U$, $E^U$) by excitation transducers (41, 42, 43, 44) bringing said plate to a plurality of resonant frequencies, sensors (41', 42', 43', 44') detecting the resonant signals produced at said particular points, measurement means (81, 82) measuring the resonant frequency shifts of signals that are linear combinations of the detected resonant signals, said shifts being a function of mechanical constraints induced by said forces and transferred to said plate (21) by said frame (22), the components of said force torsor being determined on the basis of the resonant frequency shifts measured on the plates (21) of said sensitive zones (1).

2. The sensor as claimed in claim 1, **characterised in that** said excitations are produced simultaneously.

3. The sensor as claimed in any one of claims 1 or 2, **characterised in that** said particular points ($N^u$, $S^U$, $W^U$, $E^U$) are located at vibration mode nodal lines (61, 62, 63, 64, 65, 66) in order to allow resonant frequencies of particular modes to be selected by said combinations.

4. The sensor as claimed in any one of the preceding claims, **characterised in that** the combination of said frequencies is an addition or subtraction operation.

5. The force sensor as claimed in any one of the preceding claims, **characterised in that**, with each plate (21) having a dimension along an axis x and a dimension along an axis y, it comprises four particular excitation points ($N^u$, $S^U$, $W^U$, $E^U$), with a northern point ($N^u$) and a southern point ($S^u$) being located on the axis of symmetry (62) of said plate along y, and a western point ($W^u$) and an eastern point ($E^u$) being located on the axis of symmetry (65) along x, said northern and southern and western and eastern points being symmetrically located relative to the intersection of the two axes of symmetry (62, 65).

6. The sensor as claimed in claim 5, **characterised in that** three resonant frequencies of three vibration modes are selected, a frequency of a first mode being selected by adding the resonant frequencies of the northern point ($N^u$) and of the southern point ($N^U + S^U$) and/or of the western point ($W^U$) and of the eastern point ($W^U + E^U$), a frequency of a second mode being selected by performing a subtraction between the measurement of the northern point and the measurement of the southern point ($N^U - S^U$), and a third frequency of a third mode being selected by performing a subtraction between the measurement of the western point and the measurement of the eastern point ($W^U - E^U$).

7. The sensor as claimed in any one of the preceding claims, **characterised in that** the measurements of shifts are performed by phase locking circuits (81), the output signal of which controls a transducer.

8. The sensor as claimed in any one of the preceding claims, **characterised in that** said transducers (41, 42, 43, 44) are of the piezoelectric type.

9. The sensor as claimed in any one of the preceding claims, **characterised in that** the sensors (41', 42', 43', 44') are of the piezoelectric type, each fixed facing a transducer on the other side of the face of said plate (21), the produced signals being the signals of loads of said piezoelectric type sensors.

10. The sensor as claimed in any one of the preceding claims, **characterised in that** said test body (10) is monolithic.

11. The sensor as claimed in any one of the preceding claims, **characterised in that** said sensitive zones (1) form a non-zero angle with said interfaces (2, 3), providing said test body (10) with a pyramidal appearance.

12. The sensor as claimed in any one of claims 1 to 10, **characterised in that** said zones (1) form a zero angle with said interfaces (2, 3), providing said test body with a flat appearance.

13. The sensor as claimed in any one of the preceding claims, **characterised in that** the geometry of said test body (10) is invariant following the angle separating the central points of two sensitive zones.

14. The sensor as claimed in any one of the preceding claims, **characterised in that** the sensitive plate (21) is placed outside the neutral fibre (50) of the assembly formed by the frame (22) and said plate (21).

15. The sensor as claimed in any one of the preceding claims, **characterised in that** it comprises a protective cover (11, 12, 13) covering said test body.

FIG.1a

FIG.1b

FIG.1c

FIG.1d

FIG.2a

FIG.2b

FIG.3

FIG.4

FIG.5

FIG.6

FIG.7

FIG.8

| Modes (i,j) | (1,2) 212 | (1,3) 213 | (2,1) 221 | Modes sélectionnés |
|---|---|---|---|---|
| $N^d + S^d$ | 0 | $+2\overline{Q}_{(1,3)}$ | 0 | (1,3) |
| $N^d - S^d$ | $+2\overline{Q}_{(1,2)}$ | 0 | 0 | (1,2) |
| $W^d + E^d$ | 0 | $-2\overline{Q}_{(1,3)}$ | 0 | (1,3) |
| $W^d - E^d$ | 0 | 0 | $+2\overline{Q}_{(2,1)}$ | (2,1) |

FIG.9

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011061334 A1

**Littérature non-brevet citée dans la description**

- **A. CHESHMEHDOOST ; B.E. JONES.** Design and performance characteristics of an integrated high capacity DETF-based force sensor. *Sensors and Actuators A: Physical,* Mars 1996, vol. 52 (13), 99-102
- **T. FABULA ; H.J. WAGNER ; B. SCHMIDT ; S. BUTTGENBACH.** Triple-beam resonant silicon force sensor based on piezoelectric thin _lms. *Sensors and Actuators A: Physical,* Avril 1994, vol. 42 (13), 375-380

- **C. BARTHOD ; Y. TEISSEYRE ; C. GHIN ; G. GAU-TIER.** Resonant force sensor using a PLL electronic. *Sensors and Actuators A: Physical,* Avril 2003, vol. 104 (2), 143-150
- **D.CASTANO-CANO ; M.GROSSARD ; A.HU-BERT.** Multi-axis Force Sensing with Pre-stressed Resonant Composite Plates : An Alternative to Strain Gauge Force Sensors. *2014 IEEE/ASME International Conférence on Advanced Intelligent Mechatronics (AIM),* 08 Juillet 2014